# EUROPÄISCHE PATENTSCHRIFT

(11) **EP 1 103 370 B1**
(45) Veröffentlichungstag und Bekanntmachung des Hinweises auf die Patenterteilung: **17.09.2003**
(21) Anmeldenummer: 00124697.4
(22) Anmeldetag: 11.11.2000
(51) Int. Cl.: B32B 15/08, B29C 70/88, B29C 70/34

(54) **Verfahren zur Herstellung eines Profiles aus einem Hybridwerkstoff**
Method for manufacturing a profile from hybrid material
Procédé pour la fabrication d'un profile en matière hibride

(30) Priorität: 24.11.1999 DE 19956394
(43) Veröffentlichungstag der Anmeldung: 30.05.2001
(73) Patentinhaber: Airbus Deutschland GmbH, 21129 Hamburg (DE); Fokker Aerostructures B.V., 3351 LB Papendrecht (NL)
(72) Erfinder: Kielies, Andreas, Dipl.-Ing., 28279 Bremen (DE); Beck, Rolf, Dipl.-Ing., 28844 Weyhe (DE); Döhle, Günter, Dipl.-Ing., 28307 Bremen (DE)
(74) Vertreter: Hansmann, Dierk, Dipl.-Ing.

(56) Entgegenhaltungen:
- EP-A- 0 473 843

## Beschreibung

Die Erfindung bezieht sich auf ein Verfahren zur Herstellung eines Profiles aus einem Hybridwerkstoff gemäß dem Oberbegriff des Anspruches 1.

Verfahren zur Herstellung von Profilen mit hybriden Aufbau sind z.B. aus dem Patentschrift EP-A-473 843 bekannt. Danach wird der hybride Aufbau in einer Ebene ausgehärtet und mittels bekannter Umformverfahren verarbeitet. Das Umformvermögen dieser Umformverfahren ist dermaßen begrenzt, wonach man mit ihnen durch plastische Formänderung der Profile (aus hybriden Werkstoffen) nur relativ große Radien erzielen wird. Deshalb wird eine Verwendung von derweise umgesetzten Profilanwendungen im Flugzeugbau nur eingeschränkt möglich sein bzw. dort nicht für alle Einsatzzwecke ausreichen. Außerdem lassen sich rückfederungsbedingte Konturabweichungen der anfänglich eben gelagerten Schichten [Prepregund Metallschicht(en)], aus denen sich diese Profile zusammensetzen, nach Abschluß der Umformung und während der nachfolgenden Aushärtung sehr schwierig beherrschen, wobei der erfahrene Fachmann ungewünschten Delamationen der (mehrzählig vorhandenen) Schichten, aus denen sich der Profilaufbau integriert, erwarten wird, die bei Benutzung der für ihn bekannten Verfahren nach seinen Erfahrungen sehr schnell auftreten können.

Außerdem ist dem Fachmann bekannt, daß man auch üblicherweise metallene Schichten einzeln durch bekannte Umformverfahren formverändert, um eine für den späteren Profilaufbau bestimmte Metalllage mit entsprechend geformten Querschnitt zu erhalten. Jede Schicht verlangt dabei eine eigene Kontur, soll heißen, zur Vermeidung von Schichtdickenschwankungen müssen unterschiedliche Abwicklungen berücksichtigt werden, die zu hohen Werkzeugkosten bzw. Herstellungskosten führen. Anschließend werden die Metalllagen geschichtet und danach verklebt (ausgehärtet), um den angedeuteten Profilaufbau zu erhalten. Mit dieser Technologie lassen sich ebenfalls nur Profile mit relativ großen Radien erzielen.

Demzufolge liegt der Erfindung die Aufgabe zugrunde, ein Verfahren aufzuzeigen, mit dem die Nachteile des Standes der Technik beseitigt werden und Profile aus einem Hybridwerkstoff in beliebiger Form ohne zusätzliche Nacharbeit(en), wie aufwendiges Richten der hergestellten Profile, erzielt werden.

Diese Aufgabe wird durch die im Anspruch 1 aufgezeigten Maßnahmen gelöst. In den Unteransprüchen sind zweckmäßige Weiterbildungen und Ausgestaltungen dieser Maßnahmen angegeben.

Die Erfindung ist in einem Ausführungsbeispiel anhand der beigefügten Zeichnungen näher erläutert.

Es zeigen
- Fig. 1: einen aus mehreren Metall- und Prepreg-Streifen zusammengesetzten Schichtenaufbau;
- Fig. 2: den Schichtenaufbau nach Fig. 1 nach geschehener Umformung im ausgehärteten Endzustand;
- Fig. 3: das Detail X nach der Fig. 2.

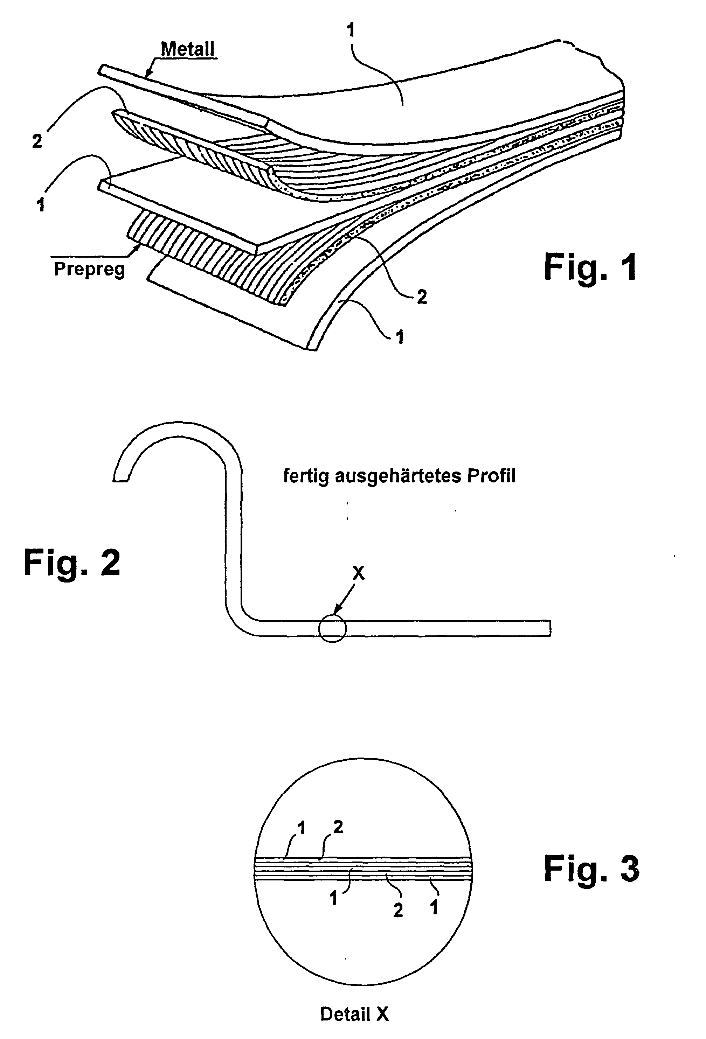

Es wird vorangestellt, daß der Schichtenaufbau nach der Fig. 1 aus mehreren ebenen Zuschnitten von Metall- und Prepregstreifen 1, besteht, die abwechselnd in beliebiger Anzahl geschichtet werden. Das Zuschnittmaterial wird in einem (nicht näher betrachteten) Arbeitsschritt ggf. vorbehandelt und danach auf das entsprechende Maß eines Streifens zugeschnitten.

Das vorgestellte Verfahren zur Herstellung eines Profiles aus einem Hybridwerkstoff verwendet einen Schichtenaufbau, der aus mehreren übereinander angeordneten Schichten aus Metall und Prepreg, deren Anzahl je nach gewünschter Dicke bzw. Festigkeit des im Endzustand vorliegenden Profils nicht begrenzt wird, gebildet wird. Die als Metall- und Prepreg-Streifen 1, ausgebildeten Schichten werden ebenflächig übereinander gelagert und einheitlich ausgerichtet. Dabei werden diese Streifen abwechselnd und in beliebiger Anzahl geschichtet. Nach der Fig. 1 umfaßt der innere Schichtenaufbau jeweils (immer) einen Metallstreifen1, dem zu beiden Seiten (auf der Grund- und Deckfläche des quaderförmigen Streifens) ebenflächig jeweils ein Prepreg-Streifen 2 aufliegt. Der außenliegenden sichtbare Bereich des geschichteten Paketes (genauer: die Grund- und Deckfläche des Paketes) wird jeweils mit einem Metallstreifen 1 abgeschlossen, der einem ihm untergeschichteten Prepreg-Streifen 2 aufliegt.

Der eigentliche Verfahrensablauf zur Herstellung des aus einem Hybridwerkstoff bestehenden Profiles beginnt mit der Umsetzung eines Schrittes a), wonach auf den einzelnen Metallstreifen 1 ein im feuchten Zustand befindlicher faserverstärkter Prepregstreifen 2, dessen hitzehärtbares Tränkungsmittel die Metallstreifen-Oberfläche befeuchtet, geschichtet wird oder umgekehrt, bis das der Schichtenaufbau abgeschlossen wird.

Dieser Schichtenaufbau wird darauffolgend mehreren aufeinanderfolgenden Umformschritten unterzogen.

Derwegen wird dieser Schichtenaufbau anschließend nach einem Schritt b) mit einer (figurlich nicht gezeigten) Vorrichtung zum plastischen Formändem in mehreren aufeinanderfolgenden Umformschritten solange umgeformt, bis eine vordefinierte Profilform mit einem formveränderten Querschnitt des Schichtenaufbaus erreicht wird.

Bei der Vorrichtung handelt es sich weitestgehend um eine Maschine mit der der Schichtenaufbau im Paket in einem Arbeitsgang durch Biegen, Kanten, Rollformen, Pressen oder sonstigen dem Fachmann bekannten Umformverfahren plastisch formverändert wird, wodurch der Querschnitt des Schichtenaufbaus [nach Abschluß des Schrittes b) ] im geschlossenen Zustand (im anliegenden Zustand der Streifen) eine (gegenüber dem ebenflächigen Aufbau veränderte) vordefinierte Profilform, bspw. eine hakenförmige Biegung oder rechtwinklige Abwinklung (Abkantung) - mit kleinem Radius, erfährt. Wie angedeutet, in dieser Situation nach der abgeschlossenen Umformung liegen die einzelnen Streifen des Schichtenaufbaus noch lose aufeinander.

Danach wird in einem darauffolgendem Schritt c) der geformte Schichtenaufbau einem Autoklaven positioniert und dort unter auf ihn lastenden mechanischen Druck und Beaufschlagung von Temperatur aushärten. Da die einzelnen Streifen (Metallstreifen 1 und Prepreg-Streifen 2) nach erledigter Umformung des Schichtenaufbaus vorerst noch lose und abwechselnd in der vorgesehenen Reihenfolge geschichtet sind, werden geeignete Stütz- oder sonstiger Fixiermittel eingesetzt, um während des Aushärtens mit diesen Mitteln eine Kalibrierung des Schichtenaufbaus in eine bestimmte Aushärteposition vorzunehmen, damit die durch das Umformen entstandenen Konturabweichungen abgestellt werden. In Abhängigkeit der eingesetzten hybriden Werkstoffe wird der Aushärtungsprozeß des Schichtenaufbaus im Autoklaven bei einer Temperatur zwischen 120 und 180° C, einer Haltezeit zwischen 60 und 120 Minuten und einer Druckbeaufschlagung von 2 bis 10 bar durchgeführt.

Eine nach Abschluß des Aushärteprozesses erhaltene endgültige (fertig ausgehärtete) Profilform wird in Fig. 2 dargestellt. Außerdem wird dazu in der Fig. 3 das Detail X - an der in der Fig. 2 hingewiesenen Stelle des Schichtenaufbaus - gezeigt. Aus der Detaildarstellung erkennt man deutlich die hinsichtlich der Fig. 1 vorerwähnte Schichtenfolge, deren Querschnitt im Paket vorab (nach der bekannten Technologie) durch Biegen (Abkanten) und Rollformen oder Pressen formverändert wird, um die gewünschte Querschnittsform nach Fig. 2 zu erhalten. Es handelt sich um einen (im Flugzeugbau verwendbaren) Stringerquerschnitt, der aus mehreren geschichteten Lagen von Blech und beispielsweise CFK, GFK-Prepreg besteht.

Zusammenfassend betrifft die vorgestellte Lösung ein Verfahren zur Herstellung eines Profiles in beliebiger Form aus einem Hybridwerkstoff, bei dem das Profil in mehreren aufeinanderfolgenden Umformschritten durch Biegen, Kanten, Rollformen, Pressen, Durchsetzen ect. aus ebenen Zuschnitten hergestellt wird. Die ebenen Zuschnitte bestehen aus Metallstreifen 1 und Prepreg-Streifen 2, die abwechselnd in beliebiger Anzahl - bspw. nach dem Vorbild der Fig. 1 - geschichtet sind. Anschließend wird der geformte Schichtenaufbau im Autoklaven ausgehärtet. Durch eine entsprechende Stützung / Fixierung während des Aushärtens lassen sich durch das Umformen entstandene Konturab-weichungen, wie bspw. Verdrehungen, Winkelabweichungen, Säbligkeit ect., kalibrieren.

Eine Nacharbeit der Profile, bspw. ein Profilrichten, ist nicht notwendig. Aufgrund der spezifischen Arbeitsfolgen stellt dieses Verfahren eine äußerst wirtschaftliche Möglichkeit dar, Profile aus hybriden Werkstoffen mit kleinen Radien herzustellen.

## Patentansprüche

1. Verfahren zur Herstellung eines Profiles aus einem Hybridwerkstoff, bei dem ein Schichtenaufbau eingesetzt wird, der aus mehreren übereinander angeordneten und einheitlich ausgerichteten ebenflächigen Schichten unterschiedlichen Materials, die abwechselnd und in beliebiger Anzahl geschichtet werden, gebildet wird, dabei eine aus Metallschichten und Prepregschichten realisierte Schichtenfolge berücksichtigt wird, die mit einer der betreffenden Metallschicht zu beiden Seiten aufliegenden und im nichtausgehärteten Zustand befindlichen Prepregschicht gebildet wird und mit einer außenliegenden Metallschicht abschließen wird,
**gekennzeichnet durch** die folgende Schritte,
a) auf die einzelne Metallschicht wird die im feuchten Zustand befindliche faserverstärkte Prepregschicht von CFK- oder GFK- oder AFK-Prepreg, deren hitzehärtbares Tränkungsmittel die Metallschicht-Oberfläche befeuchtet, geschichtet oder umgekehrt, bis daß der Schichtenaufbau abgeschlossen wird,
b) anschließend wird der Querschnitt des Schichtenaufbaus mit einer Vorrichtung zum plastischen Formändern in mehreren aufeinanderfolgenden Umformschritten **durch** Druck- oder Biegeumformen solange umgeformt, bis eine vordefinierte Profilform mit einem formveränderten Querschnitt des Schichtenaufbaus erreicht wird,
c) danach wird der geformte Schichtenaufbau in einem Autoklaven positioniert und dort unter auf ihm lastenden mechanischen Druck und Beaufschlagung von Temperatur ausgehärtet, wonach eine endgültige Profilform erreicht wird.

2. Verfahren nach Anspruch 1, **dadurch gekennzeichnet, daß** während des Aushärtens mittels geeigneter Stütz- oder sonstiger Fixiermittel eine Kalibrierung des geformten Schichtenaufbaus in eine veränderte Aushärteposition vorgenommen wird, damit durch das Umformen entstandene Konturabweichungen abgestellt werden.

3. Verfahren nach Anspruch 1, **dadurch gekennzeichnet, daß** ein aus den ebenen Zuschnitten von Metall- und Prepregstreifen sich integrierender Schichtenaufbau, die abwechselnd in beliebiger Anzahl geschichtet werden, umgeformt wird.

4. Verfahren nach Anspruch 1, **dadurch gekennzeichnet, daß** der Querschnitt des Schichtenaufbaus vorwiegend durch Biegen, Kanten, Rollformen, Durchsetzen oder Pressen, formverändert wird, wodurch auch Profilformen von hybriden Werkstoffen mit kleinen Radien erzielt werden.

5. Verfahren nach Anspruch 1, **dadurch gekennzeichnet, daß** in Abhängigkeit der eingesetzten Werkstoffe der Aushärtungsprozeß des Schichtenaufbaus im Autoklaven bei einer Temperatur zwischen 120 und 180° C, einer Haltezeit zwischen 60 und 120 Minuten und einer Druckbeaufschlagung von 2 bis 10 bar durchgeführt wird.

6. Verfahren nach Anspruch 1, **dadurch gekennzeichnet, daß** der Schichtenaufbau aus mehreren geschichteten Lagen von Blech und Prepreg gebildet wird.

## Claims

1. Process for the production of a profile of a hybrid material, in which a layer structure is employed that is formed from a plurality of planar layers of different materials arranged on top of one another and aligned uniformly and that are coated alternately and in arbitrary number, in which connection a layer sequence consisting of metal layers and prepreg layers is considered that is formed with a prepreg layer lying on both sides of the respective metal layer and is in the non-hardened state and is sealed with an external metal layer, **characterised by** the following steps:
a) the fibre-reinforced prepreg layer consisting of CFK or GFK or AFK prepreg present in the moist state, whose heat-hardenable impregnating agent moisturises the metal layer surface, is coated onto the individual metal layer or conversely until the layer structure is sealed,
b) the cross-section of the layer structure is then shaped using a device for effecting plastic shaping alterations in several successive shaping steps by pressure or bending shaping operations until a predefined profile shape having a shape-altered cross-section of the layer structure is achieved,
c) the formed layer structure is then placed in an autoclave where it is hardened under the effect of mechanical pressure and temperature, a final profile shape being achieved.

2. Process according to claim 1, **characterised in that** during the hardening a calibration of the formed layer structure into a changed hardening position is carried out by means of suitable supporting means or other fixing means, so that contour deviations produced by the shaping are compensated.

3. Process according to claim 1, **characterised in that** a self-integrating layer structure consisting of the flat cut sections of metal strips and prepreg strips, which are coated alternately in an arbitrary number, is shaped.

4. Process according to claim 1, **characterised in that** the cross-section of the layer structure is altered as regards shape, predominantly by bending, edging, roll forming, interspersing/penetration or pressing, whereby profiled shapes of hybrid materials having small radii are also obtained.

5. Process according to claim 1, **characterised in that**, depending on the materials employed, the hardening of the layer structure is carried out in an autoclave at a temperature between 120° and 180°C, a holding time between 60 and 120 minutes, and under a pressure of 2 to 10 bar.

6. Process according to claim 1, **characterised in that** the layer structure is formed from a plurality of coated layers of metal sheeting and prepreg.

## Revendications

1. Procédé pour la fabrication d'un profilé à partir d'un matériau hybride, dans lequel une structure en couches est utilisée, ladite structure se présentant sous la forme de plusieurs couches lisses superposées, dirigées de la même manière et constituées d'un matériau différent, lesdits matériaux étant superposés alternativement et dans une quantité arbitraire, une suite de couches formée de couches métalliques et de couches pré-imprégnées étant prise en compte, ladite suite étant formée d'une couche pré-imprégnée située de chaque côté de la couche métallique concernée, dans un état non durci et étant terminée par une couche métallique externe,
et **caractérisé par** les étapes suivantes :
a) la couche pré-imprégnée renforcée par fibres et présente à l'état humide est disposée sur la couche métallique et composée de pré-imprégnations de CFK, GFK ou AFK, l'agent d'imprégnation thermodurcissable de ces pré-imprégnations humidifiant puis stratifiant la surface de la couche métallique et vice-versa, jusqu'à ce que la structure en couches soit terminée,
b) la section transversale de la structure en couches est ensuite déformée avec un dispositif de déformation plastique en plusieurs étapes de déformation successives, par pression ou flexion, jusqu'à ce qu'une forme profilée prédéfinie avec section transversale déformée de la structure en couches soit obtenue.
c) La structure en couches formée est ensuite positionnée dans un autoclave puis durcie par pression mécanique et injection de température pour obtenir une forme profilée définitive.

2. Procédé selon la revendication 1, **caractérisé en ce que** un calibrage de la structure en couches formée jusque dans une position de durcissement modifiée est effectué pendant le durcissement à l'aide d'agents de support ou de fixation, afin que les divergences de contour apparues suite à la déformation soient supprimées.

3. Procédé selon la revendication 1, **caractérisé en ce qu'**une structure en couches intégrée à partir des coupes planes de couches métalliques et pré-imprégnées stratifiées alternativement et en quantité arbitraire est déformée.

4. Procédé selon la revendication 1, **caractérisé en ce que** la section transversale de la structure en couches est modifiée principalement par flexion, retournement, roulette, traversée ou compression, des formes profilées de matériaux hybrides à faibles rayons étant obtenues.

5. Procédé selon la revendication 1, **caractérisé en ce que**, en fonction des matériaux utilisés, le processus de durcissement de la structure en couches est réalisé en autoclave à une température située entre 120 et 180°C, avec un temps de repos entre 60 et 120 minutes et avec une pression de 2 à 10 bars.

6. Procédé selon la revendication 1, **caractérisé en ce que** la structure en couches est composée de plusieurs couches stratifiées en tôle et pré-imprégné.
